# FASCICULE DE BREVET EUROPEEN

(11) **EP 1 566 043 B1**
(45) Date de publication et mention de la délivrance du brevet: **27.04.2016**
(21) Numéro de dépôt: 03789488.8
(22) Date de dépôt: 24.11.2003
(51) Int. Cl.: H04L 29/08, H04L 29/06

(54) **PROCEDE ET SYSTEME INFORMATIQUE POUR DECLENCHER UNE ACTION SUR DES DONNEES DE COMMUNICATIONS NUMERIQUE**
VERFAHREN UND DATENVERARBEITENDES SYSTEM ZUR AUSLÖSUNG EINER HANDLUNG VON DATEN AUS DIGITALKOMMUNIKATIONEN
METHOD AND COMPUTER SYSTEM FOR TRIGGERING AN ACTION ON DIGITAL COMMUNICATION DATA

(30) Priorité: 28.11.2002 FR 0214960
(43) Date de publication de la demande: 24.08.2005
(73) Titulaire: Qosmos, 75017 Paris (FR)
(72) Inventeur: FDIDA, Serge, F-94140 Alfortville (FR); HARMEL, Gautier, F-75014 Paris (FR); HORLAIT, Eric, F-80000 Amiens (FR); PUJOLLE, Guy, F-82320 Chatillon (FR); TOLLET, Jerome, F-75003 Paris (FR)
(74) Mandataire: Cabinet Plasseraud
(86) Numéro de dépôt international: PCT/FR2003/003473
(87) Numéro de publication internationale: WO 2004/051965

(56) Documents cités:
- EP-A- 1 180 882
- WO-A-01/22686
- US-A- 5 793 954
- US-A- 6 157 955

## Description

Le domaine de l'invention est celui du contrôle et de la gestion des flux d'informations qui sont transmises sous forme de données de communication numérique.

A titre d'exemples connus, on peut citer le routage, la gestion des ressources et de la qualité de service, le contrôle de sécurité, l'observation de certains contenus, la facturation de l'usage des moyens de communication.

Le routage est essentiellement appliqué au niveau réseau pour acheminer les données de communication depuis un émetteur jusqu'à un récepteur. En commutation de circuits, il est effectué par signalisation qui établit une liaison physique fixe de bout en bout. En commutation de paquets, une adresse telle qu'une adresse IP, permet de passer à travers plusieurs réseaux matérialisés par des couches physiques éventuellement différentes sans nécessiter de monopoliser une ligne physique pour l'ensemble d'une communication. En commutation de cellules telle que procurée par le protocole ATM, l'établissement d'un circuit virtuel concilie la rapidité offerte par la commutation de circuit avec l'exploitation optimale des ressources physiques offerte par la commutation de paquet. Dans l'état connu de la technique, le routage s'appuie essentiellement sur des adresses réseaux prédéterminées basées sur des notions de localisation géographique. On constate une évolution des besoins vers une abstraction croissante des services réseaux. Il existe des techniques qui apportent déjà des solutions à certains de ces besoins, comme par exemple celles des réseaux virtuels locaux (VLAN pour virtual local network en anglais). Cependant, les actions effectuées par un routeur pour aiguiller des données, restent encore largement conditionnées par des critères relativement figés tels que des spécifications préalables d'architecture et d'adresses pour attribuer un réseau virtuel local à une entreprise prédéterminée. On peut souhaiter qu'un réseau virtuel soit lié à une application particulière, à un type de données ou encore à un service spécifique. Malheureusement, l'adoption d'une telle approche est dissuasive en raison de sa complexité de déploiement et d'administration.

La gestion des ressources et de la qualité de service consiste à effectuer des actions telles que celles pour attribuer un débit ou un niveau de priorité de transmission à un flot syntaxique de données. Un flot syntaxique correspond à un ensemble de paquets identifiés par des critères de niveau réseau, transport voire session. La gestion des ressources et de la qualité de service basée sur une reconnaissance de flot syntaxique n'est pas satisfaisante si on veut la réaliser au niveau applicatif en fonction d'un service fourni tel que la restitution en continu de musique ou de films (audio ou video streaming en anglais), l'appartenance à un réseau virtuel, à un groupe d'échanges, un codage de contenu communiqué tel que par exemple celui prescrit par la norme G721 de codage et de compression du son, l'identification d'un utilisateur ou d'un mot clé pour acheter de la bande passante sur une communication déterminée. Un même flot syntaxique peut transporter des données de types différents. Par exemple, un flot http qui s'affiche sur un poste client, présente d'abord des données textuelles au détriment des images qui s'affichent lorsque la capacité du système se libère progressivement. Une attribution de bande passante unique à l'ensemble d'un flot syntaxique n'est pas satisfaisante alors qu'une bande passante faible suffit à une transmission de données textuelles et qu'une bande passante forte est plus adaptée pour une transmission de données visuelles ou auditives.

Le contrôle de sécurité comprend les actions effectuées sur les données de communication numérique transmises pour en réserver l'accès ou la diffusion aux seules personnes autorisées. On connaît les pare-feux (firewall en anglais) qui interdisent ou laissent passer des paquets de données en fonction de reconnaissance d'adresses réseaux comme IP, de ports de transport comme TCP ou UDP. De tels critères posent des difficultés pour les applications qui utilisent des ports négociés dynamiquement. Par exemple dans le cas du protocole FTP, une connexion de commandes est d'abord ouverte généralement sur le port TCP21. Cette connexion permet à un client de se connecter à un serveur, de naviguer à travers l'arborescence du système de fichier distant et d'effectuer des requêtes (GET) sur le serveur. Lorsque le client effectue une requête, le serveur informe le client d'un port particulier sur lequel il doit se connecter pour récupérer le. fichier désiré, ce qui ouvre une connexion de données. La transaction a lieu sur ce port dynamiquement négocié mais il est impossible de reconnaître le protocole FTP en analysant cette connexion car elle ne dispose d'aucune entête particulière. Seules les données binaires du fichier échangé, transitent. Il est alors nécessaire d'analyser le contenu complet de la session de commande pour connaître toutes les connexions de données. Il en est de même pour nombre de protocoles couverts par la norme H. 323 relative aux systèmes multimédia et des connexions d'applications temps réel (RTP pour Real Time Application en anglais). Lorsqu'une session H.323 est initiée, un port dynamique est alloué à l'aide du protocole H.245 relatif au contrôle d'interface utilisateur, pour définir la connexion RTP sur laquelle transitent la voix et ou la vidéo. On peut se dispenser d'une connaissance préalable-du port car une entête particulière utilisée pour chaque paquet de voix, permet de reconnaître la connexion RTP.

Parmi les actions sécuritaires effectuées sur des données de communication numérique, on connaît aussi dans le domaine de la cryptographie, celles de chiffrement, de signature ou d'authentification de messages. C'est le plus souvent, l'application générant les messages qui déclenche les actions cryptographiques. Il existe aussi des moyens de déclenchement d'actions cryptographiques au niveau réseau tels que IPSEC par exemple pour chiffrer des données émises sur un réseau étendu à partir d'un réseau local. Les critères de déclenchement, restent ici encore sur des flots de type syntaxique. Il est difficile de déclencher a posteriori, indépendamment de l'application, des actions de chiffrement ou d'authentification sur des données de communication numérique sur les parties les plus sensibles de leur contenu pour par exemple économiser des ressources de calcul.

L'observation des contenus (monitoring en anglais) est utile pour effectuer par exemple des statistiques sur les taux d'erreurs, les volumes d'information véhiculés ou la signification des informations échangées. Le contrôle de comportement fait partie de ce type de fonction communicante.
Le document WO-A-01/22686 décrit un appareil et un procédé pour traiter des paquets de données en fonction de règles, en particulier pour déclencher des actions de routage sur ces paquets en fonction de leur classification.
Le document US 5,793,954 décrit un système et un procédé à but général d'analyse de réseau. Il présente une méthode générale pour décrire les protocoles et l'exploitation de ces descriptions est ensuite syntaxique en se fondant sur des champs protocolaires.
Selon l'état connu de la technique, ici encore le choix d'observer tel ou tel contenu se fait essentiellement par flot syntaxique. Les actions d'observation sont même parfois déclenchées sur l'ensemble des données de communication sans distinction fine de ce qu'elles concernent. Des actions d'observation plus ciblées seraient utiles pour leur tri en vue de leur exploitation.

Les problèmes évoqués ci-dessus se retrouvent dans d'autres fonctions communicantes telles la facturation de l'usage des moyens de communication ou encore la compression des données. Généralement c'est le niveau applicatif qui déclenche les actions de compression et de décompression des données. On peut aussi envisager de déclencher une action de compression au niveau transport par exemple sur toutes les données de communication acheminées par un port spécialement dédié. Cependant une telle approche reste d'ordre syntaxique et peu ou mal adaptée à des niveaux fonctionnels plus élevés.

On notera aussi que chaque fonction communicante fait généralement l'objet d'un développement et souvent d'un déploiement spécifique en définissant préalablement les actions à déclencher et les flots syntaxiques à considérer. Ceci manque de souplesse pour élargir l'étendue des fonctions communicantes.

En résumé, les données de communication numérique comprennent généralement une entête qui contient des signaux qui codent des informations protocolaires propres à définir des flots syntaxiques et des signaux qui codent des informations de niveau applicatif, ces dernières étant souvent nommées données utiles (payload en anglais). Pour chaque fonction communicante, l'enseignement de l'état de la technique est de déclencher des actions sur ces données de communication soit à leur source ou à leur accueil au niveau applicatif, soit en cours de transmission par reconnaissance dans la partie entête de valeurs connues pour identifier un flot syntaxique.

Un paramétrage adapté des applications, à condition que celles-ci le permettent, devient rapidement contraignant en terme de déploiement devant la multitude des applications mises en oeuvre dans une entité telle qu'une entreprise ou un site informatique.

La rigidité induite par une reconnaissance de valeurs connues pour identifier des flots syntaxiques, ne convient pas toujours, par exemple en cas de négociation de ports dynamique ou lorsqu'une action ne doit être exercée que partiellement sur un flot syntaxique ou communément sur plusieurs flots syntaxiques en fonction de critères de niveau fonctionnel plus élevé, tels que le besoin peut s'en faire ressentir dans les services.

Le but de l'invention est de pouvoir déclencher des actions sur les données de communication indépendamment de la ou des applications qui en sont à la source et ceci sans se limiter à une analyse purement protocolaire restreinte à des flots syntaxiques.

Le but de l'invention est aussi de pouvoir développer et déployer avec un maximum de souplesse, des fonctions communicantes qui regroupent des déclenchements d'action.

La solution est de classer les données de communication par flots sémantiques, le déclenchement de chaque action étant attribué à un flot sémantique donné.

Par opposition à un flot syntaxique, un flot sémantique regroupe toutes les données de communication qui satisfont un critère fonctionnel commun, par exemple pour satisfaire un service donné. Un flot syntaxique peut véhiculer plusieurs flots sémantiques différents. Un même flot sémantique peut nécessiter plusieurs flots syntaxiques pour être véhiculé.

L'intérêt d'une classification par flot sémantique est de pouvoir étendre à l'infini les critères de déclenchement d'action, possibilité particulièrement appréciable dans le cadre des réseaux distribués.

Un objet de l'invention est un procédé pour déclencher au moyen d'un dispositif de traitement numérique, au moins une action sur des données de communication numérique lorsqu'elles appartiennent à un même flot sémantique pour lequel ladite action est prévue.

Le procédé est remarquable en ce qu'il comprend des étapes dans lesquelles:
- ledit dispositif est alimenté avec au moins un filtre à trois états possibles qui résultent d'une ou plusieurs conditions logiques sur un ou plusieurs attributs protocolaires spécifiés pour ledit flot sémantique, un état dit valide correspondant à des valeurs d'attribut protocolaire qui confirment que la ou les dites conditions sont vérifiées, un état dit invalide correspondant à des valeurs d'attribut protocolaire qui confirment que la ou les dites conditions ne sont pas vérifiées, un état dit incertain correspondant à une absence de valeurs d'attribut protocolaire pour confirmer que la ou les dites conditions sont ou ne sont pas vérifiées, chaque attribut protocolaire étant spécifié par une suite ordonnée de noms de protocoles utilisés dans le flot sémantique et par un nom de paramètre véhiculé par un protocole dont le nom est indiqué dans ladite suite ordonnée de noms de protocoles;
- le dispositif de traitement numérique applique le filtre à trois états, sur les dites données de communication tant que ces données n'ont pas procuré de valeurs d'attribut protocolaire autres que celles dont résulte ledit état incertain du filtre;
- le dispositif de traitement numérique déclenche ladite action lorsque ledit état valide du filtre résulte de valeurs d'attribut protocolaire procurées par les données de communication.

Dans ce procédé, le filtre constitue un ingrédient réactif sur les données de communication qui appartiennent à un même flot sémantique. Cet ingrédient apporte une grande souplesse en termes de classification des données de communication par flot sémantique. Celui qui exploite le procédé peut adapter les attributs protocolaires pour satisfaire à de nombreux besoins. Par exemple pour toute nouvelle architecture protocolaire, il suffit de spécifier la suite ordonnée de nom de protocoles utilisés. L'exploitant peut définir librement par son nom le paramètre qui convient au flot sémantique sur lequel il veut déclencher des actions. L'exploitant du procédé peut ajouter d'autres flots sémantiques en créant simplement d'autres filtres avec si besoin est, d'autres attributs protocolaires pour alimenter le dispositif de traitement numérique.

On notera que l'activité exercée par le dispositif de traitement numérique est découplée d'une élaboration des filtres en vue de définir différents flots sémantiques.

Une souplesse d'adaptation supplémentaire du procédé est apportée lorsque, pour appliquer le filtre sur lesdites données de communication,
- le dispositif de traitement numérique envoie successivement l'un des dits attributs protocolaires à une interface protocolaire attribuée au protocole indiqué dans la suite ordonnée de noms de protocoles, jusqu'à ce que l'état du filtre soit valide ou invalide ou jusqu'à.avoir envoyé tous les attributs protocolaires,
- l'interface protocolaire recherche dans les données de communication, la valeur du paramètre spécifié et transmet cette valeur au dispositif de traitement numérique s'il la trouve,
- le dispositif de traitement numérique évalue l'état du filtre qui correspond à la valeur ou à l'absence de valeur transmise par l'interface protocolaire.

Ceci permet de spécialiser la recherche de valeur d'attributs protocolaires par protocole où le paramètre est utilisé et de simplifier la conception du dispositif de traitement numérique.

Avantageusement chaque filtre pour alimenter ledit dispositif de traitement numérique, est défini par une combinaison logique de règles dans une première table, chaque règle étant définie dans une deuxième table par une expression de vérification comprenant au moins un opérateur de comparaison dont un argument est l'attribut protocolaire.

Particulièrement pour évaluer l'état du filtre qui correspond à la valeur ou à l'absence de valeur transmise par l'interface protocolaire, le dispositif de traitement numérique évalue l'état d'au moins une règle dans la combinaison logique en fonction de la transmission de valeur puis l'état donné par la combinaison logique appliquée aux états évalués de règles.

L'appartenance des données de communication à un flot sémantique, peut varier au cours du temps. Pour répondre à ce cas de figure, le procédé comprend une étape dans la quelle les données de communication numérique sont scrutées pour détecter tout changement de valeur d'un attribut protocolaire de façon à permettre d'évaluer un changement d'état du filtre qui correspond au changement de valeur.

Un autre objet de l'invention est un système informatique pour déclencher au moins une action sur des données de communication numérique lorsqu'elles appartiennent à un même flot sémantique pour lequel ladite action est prévue.

Le système informatique est remarquable en ce qu'il comprend:
- un dispositif de traitement numérique constitué d'un moteur de filtrage et d'un moteur d'actions;
- une base de données pour alimenter le moteur de filtrage avec au moins un filtre à trois états possibles qui résultent d'une ou plusieurs conditions sur un ou plusieurs attributs protocolaires spécifiés pour ledit flot sémantique,
- au moins une structure de données pour répertorier un état dit valide correspondant à des valeurs d'attribut protocolaire qui confirment que la ou les dites conditions sont vérifiées, un état dit invalide correspondant à des valeurs d'attribut protocolaire qui confirment que la ou les dites conditions ne sont pas vérifiées, un état dit incertain correspondant à une absence de valeurs d'attribut protocolaire pour confirmer que la ou les dites conditions sont ou ne sont pas vérifiées, chaque attribut protocolaire étant spécifié par une suite ordonnée de noms de protocoles utilisés dans le flot sémantique et par un nom de paramètre véhiculé par un protocole dont le nom est indiqué dans ladite suite ordonnée de noms de protocoles;

- des moyens de réception des données de communication, utilisables par le moteur de filtrage pour appliquer chaque filtre nécessaire sur les dites données de communication tant que ces données n'ont pas procuré de valeur d'attribut protocolaire autres que celles dont résulte ledit état incertain du filtre;
- des moyens de transmission des données de communication, utilisables par le moteur d'action pour déclencher ladite action lorsque ledit état valide est contenu dans la structure de données.

Ce système informatique dans lequel le moteur de filtrage et le moteur d'action constituent deux éléments découplés d'un dispositif de traitement numérique, permet de mettre en oeuvre le procédé conforme à l'invention.

Le système informatique peut être facilement adapté à toute apparition de nouveau protocole dans l'évolution des technologies de communication lorsqu'il comprend une interface protocolaire attribuée à chaque protocole utilisable dans le flot sémantique, agencée pour recevoir du moteur de filtrage, les attributs protocolaires définis pour le protocole auquel l'interface protocolaire est attribuée;
- l'interface protocolaire étant agencée pour rechercher dans les données de communication, la valeur du paramètre spécifié et pour transmettre cette valeur au moteur de filtrage s'il la trouve,
- le moteur de filtrage étant agencé pour évaluer l'état du filtre qui correspond à la valeur ou à l'absence de valeur transmise par l'interface protocolaire.

Il suffit alors d'ajouter une interface protocolaire spécialement conçue pour ce nouveau protocole sans avoir à reconstruire l'ensemble du système.

Avantageusement, la base de données comprend une première table qui contient une combinaison logique de règles pour chaque filtre, et une deuxième table qui contient pour chaque règle, une expression de vérification comprenant au moins un opérateur de comparaison dont un argument est l'attribut protocolaire.

Particulièrement pour évaluer l'état du filtre qui correspond à la valeur ou à l'absence de valeur transmise par l'interface protocolaire, le moteur de filtrage est agencé pour évaluer l'état d'au moins une règle dans la combinaison logique en fonction de la transmission de valeur puis l'état donné par la combinaison logique appliquée aux états évalués de règles.

Un aspect intéressant du système informatique, est dans la base de données qui comprend au moins une troisième table contenant plusieurs noms d'actions prévues chacune pour un flot sémantique différent auquel est associé un filtre spécifique.

Ceci permet de déclencher celles ou celle des actions qui convient pour chaque flot sémantique.

D'autres avantages et particularités de l'invention ressortent de la description d'un exemple de mise en oeuvre préférée qui suit en référence aux dessins annexés dans lesquels:
- la figure 1 est un schéma de système informatique conforme à l'invention;
- la figure 2 montre une structure de base de données pour le système informatique de la figure 1;
- la figure 3 représente des tables de vérités particulières à l'invention;
- les figures 4 et 5 sont des logigrammes d'étapes de procédé conforme à l'invention;
- la figuré 6 montre une structure de données du système informatique dans un état en cours d'exécution du procédé.

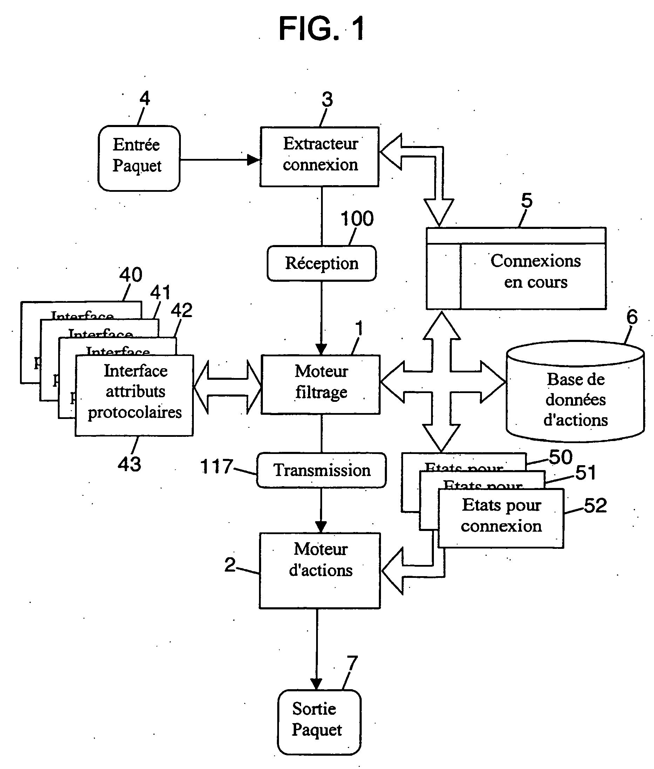

La figure 1 présente un schéma d'architecture de système informatique qui met en oeuvre l'invention.

Des données de communication numérique sont soumises à un moteur de filtrage 1 agencé comme expliqué ci après, pour analyser ces données de communication numérique, avant de les faire parvenir à un moteur d'actions 2.

Dans l'exemple présenté sur la figure 1, ces données de communication numérique proviennent d'un extracteur de connexion 3 qui reçoit d'un coupleur d'entrée 4, les données de communication numérique sous forme de paquet. L'extracteur de connexion 3 est agencé pour extraire de chaque paquet reçu, des informations qui permettent d'identifier une connexion courante à laquelle le paquet reçu appartient. Ces informations comprennent typiquement une suite ordonnée de noms de protocoles avec pour au moins un ou plusieurs des premiers noms de protocoles de la suite ordonnée, une adresse source et une adresse destination. La suite ordonnée de noms de protocoles, comprend des noms de protocoles utilisés par la pile protocolaire de la connexion à laquelle appartient le paquet. Chaque paquet ne contient pas nécessairement la totalité des informations pour identifier complètement la connexion mais généralement un minimum d'informations qui permettent de distinguer la connexion courante à laquelle appartient le paquet reçu, d'autres connexions auxquelles appartiennent d'autres paquets. Au fur et à mesure des réceptions de paquets, l'extracteur de connexion 3 est agencé pour extraire du paquet reçu, les informations d'identification de connexion de façon à les stocker dans une ligne de table 5 de connexions courantes, qui correspond à la connexion à laquelle appartient le paquet. Ainsi, l'extracteur de connexion 3 enrichit progressivement la table 5 pour identifier sur chaque ligne, une connexion courante de façon la plus complète possible. Chaque paquet reçu est ensuite soumis au moteur de filtrage 1 avec une référence vers la ligne de la table 5 qui contient les informations d'identification de la connexion courante en correspondance associative avec les informations distinctives de ce paquet.

L'état de la technique tel que celui divulgué dans la publication IEEE/ACM Transactions on Networking, Volume 6, Issue 2 (April 1998), Peter Newman et al., pages 117-129, permet de réaliser l'extracteur de connexion 3 sans qu'il soit nécessaire ici de le décrire plus en détails. La demande de brevet FR0209599 enseigne par exemple un procédé de reconnaissance et d'analyse de protocole pour faire fonctionner l'extracteur de connexion 3 avec des performances accrues.

L'extracteur de connexion 3 est utile, par exemple lorsque le système informatique objet de l'invention, est intégré dans un équipement de type serveur délégué (proxy server en anglais), situé à un noeud de réseau de communication pour dérouter sur le coupleur d'entrée 4, les paquets de connexions courantes qui contiennent les informations de communication numérique à soumettre au moteur de filtrage 1.

L'extracteur de connexion 3 peut encore être utile mais sans être indispensable, par exemple lorsque le système informatique objet de l'invention, est intégré dans un équipement qui génère lui-même les données de communication numérique d'une connexion et qui peut, par d'autres moyens, avoir accès aux informations d'identification de connexion de la pile protocolaire de communication qu'il gère lui-même.

La soumission des données de communication numérique par paquets au fur et à mesure de leur réception sur le coupleur d'entrée 4 ou de leur génération par l'équipement qui héberge le système en objet, permet de traiter les données de communications en temps réel sans avoir à en attendre une transmission totale et sans avoir à les stocker au fur et à mesure de leur réception ou de leur génération. Cependant, le système est aussi intéressant pour un traitement a posteriori (BATCH) sur un ensemble de données de communication numérique d'une connexion qui aurait par exemple été historiquée.

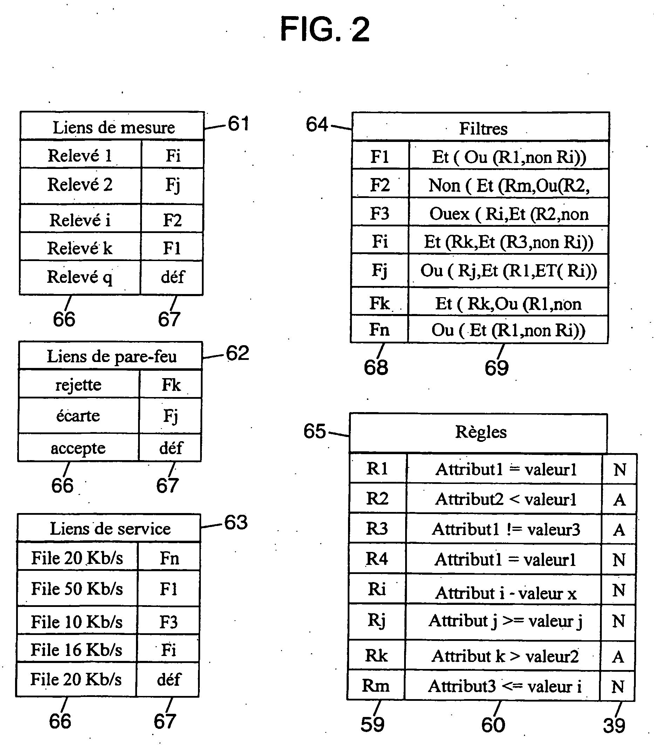

Le moteur de filtrage 1 est agencé pour accéder à une base de données d'actions 6 maintenant décrite en référence à la figure 2.

La base de données 6 comprend une ou plusieurs tables 61, 62, 63, dites de liens, au moins une table 64 dite de filtres et au moins une table 65 dite de règles.

Chaque ligne d'une table de liens associe à un nom d'action, un nom de filtre. Les noms d'actions sont répertoriés par ordre de priorité décroissante de sorte par exemple que le nom de l'action la plus prioritaire; est répertoriée dans la première ligne et que le nom d'une action dite par défaut, est répertoriée dans la dernière ligne de la table de liens. L'action par défaut est une action à déclencher au cas où aucune des actions de priorité plus élevée, n'est à déclencher. L'action par défaut peut éventuellement être une action nulle, c'est à dire sans effet.

La table 61 ici représentée, est une table dite de liens de mesure, prévue pour permettre d'observer (monitoring en anglais) un comportement ou un contenu des données de communication numérique. Différentes métriques peuvent définir ce qui est à observer dans les données de communication numérique. A titre d'exemple illustratif, on peut citer l'évaluation (measurement en anglais) de volume de données de communication exprimé en nombre d'octets ou de multiples d'octets, la prévision (forecast en anglais) sur un volume à venir, sur une durée de communication, sur un débit exprimé en octets par seconde ou en multiple d'octets par seconde, demandé pour le futur. On peut encore citer le prélèvement d'informations de type particulier tel que des chaînes de caractères à surveiller pour une signification qu'elles donnent, le contrôle de comportement (behavior control en anglais) sur les latences, les erreurs de transfert ou les blocages.

A chaque nom répertorié en colonne 66 de la table 61, correspond une action prévue pour satisfaire une ou plusieurs métriques. Par exemple "Relevé 1" correspond à une action qui cumule un nombre représentatif d'une quantité d'octets par paquet et qui mémorise une durée séparant deux arrivées de paquet successives; pour satisfaire une métrique d'évaluation de volume et de latence. Le nom "Relevé 2" correspond à une action qui cumule un nombre d'octets par paquet, pour satisfaire une métrique d'évaluation de volume. Par exemple encore, "Relevé i" correspond à une action qui ne fait rien. Au nom répertorié en colonne 66 de la dernière ligne de la table 61, est associé un nom particulier "déf" qui indique la fin de la table 61 et que le nom répertorié est celui d'une action à déclencher par défaut.

Un nom de filtre est associé en colonne 67, à chaque nom d'action de la colonne 66. Chaque filtre nommé a pour fonction de reconnaître un ensemble de données de communication qui appartiennent à un même flot sémantique. Un flot sémantique est un flux de données de communication auquel un utilisateur du système, accorde une signification particulière. Cette signification peut être de niveau physique par exemple si l'utilisateur la fait porter sur un lieu de réception ou d'émission des données de communication, sur une date ou un routage de transmission. Cette signification peut être de niveau applicatif si l'utilisateur la fait porter sur une application particulière, sur un type d'application ou sur un usager d'application. Cette signification peut être aussi de tout niveau combiné physique, applicatif et ou intermédiaire selon l'objet auquel l'utilisateur du système accorde une signification. Une ou plusieurs connexions peuvent appartenir à un même flot sémantique. De même, une connexion peut appartenir à plusieurs flots sémantiques. Ainsi, chaque action est associée à un flot sémantique pour lequel l'action doit être déclenchée.

La table 62 ici représentée, est une table dite de liens de pare-feu (firewall en anglais), prévue pour permettre d'autoriser ou d'interdire un transfert de données de communication numérique d'un même flot sémantique.

A chaque nom répertorié en colonne 66 de la table 62, correspond une action prévue pour agir sur les données de communication numérique en fonction de l'autorisation ou de l'interdiction de transfert de ces données. Par exemple "rejette" correspond à une action qui bloque le transfert des données vers leur récepteur et informe l'émetteur de ce blocage. Le nom "écarte" correspond à une action qui détruit les données de communication sans en informer l'émetteur. Par exemple encore "accepte" correspond à une action qui transmet les données de communication numérique vers le récepteur final sans les modifier.

Dans la table 62, un nom de filtre est aussi associé en colonne 67, à chaque nom d'action de la colonne 66. Un nom de filtre de la colonne 67 en table 62 peut être identique a un nom de filtre de la colonne 67 en table 61 lorsqu'une action de mesure et une action de pare-feu conviennent pour un même flot sémantique. Un nom de filtre de la colonne 67 en table 62 peut être différent des noms de filtres de la colonne 67 en table 61 lorsque des données de communication numérique appartiennent à des flots sémantiques différents en ce qui concerne leur observation et en ce qui concerne leur autorisation ou interdiction de transfert. Un même nom d'action peut être répertorié sur plusieurs lignes de la table de liens lorsque l'action nommée est applicable à plusieurs flots sémantiques différents. Par contre, un nom de filtre n'est associé qu'une seule fois au plus dans chaque table de liens car il serait incohérent dans cet exemple, de pouvoir déclencher des actions incompatibles pour un même flot sémantique. Au nom répertorié en colonne 66 de la dernière ligne de la table 62, est associé un nom particulier "déf" qui indique la fin de la table 62 et que le nom répertorié est celui d'une règle à déclencher par défaut.

La table 63 ici représentée, est une table dite de liens de services, prévue pour attribuer différents débits de transfert aux données de communication numérique.

A chaque nom répertorié en colonne 66 de la table 63, correspond une action prévue pour attribuer un débit de transfert à certaines des données de communication numérique en fonction d'une qualité de service prédéterminée pour ces données. L'action consiste généralement à aiguiller au fur et à mesure de leur réception, les données de communication vers une file d'attente agencée de façon connue pour ré émettre les données en respectant au mieux le débit spécifié pour cette file d'attente. Par exemple "File 20 Kb/s" correspond à une action qui aiguille des données vers la file d'attente à débit de transfert de 20 Kb/s. Le nom "File 50 Kb/s" correspond à une action qui aiguille des données vers la file d'attente à débit de transfert de 50 Kb/s. Par exemple encore "File 10 Kb/s" correspond à une action qui aiguille des données vers la file d'attente à débit de transfert de 10 Kb/s.

Dans la table 63, un nom de filtre est aussi associé en colonne 67, à chaque nom d'action de la colonne 66.

Il peut exister d'autres tables de liens non représentées telles qu'une table de liens de compression ou de décompression, une table de liens cryptographiques, une table de liens de routage ou toute autre table de liens sur le modèle des tables de liens représentées selon les traitements que l'utilisateur du système souhaite faire effectuer sur les données de communication numérique en fonction de flots sémantiques auxquels ces données peuvent appartenir. Dans la colonne 66 d'une table de liens de compression, on peut alors trouver des noms d'actions correspondant à différents taux de compression à appliquer sur les données de communication. Dans la colonne 66 d'une table de liens cryptographiques, on peut alors trouver des noms d'actions correspondant à différentes clés de chiffrement ou d'authentification à appliquer sur les données de communication. Dans la colonne 66 d'une table de liens cryptographiques, on peut alors trouver des noms d'actions correspondant à différentes adresses de destination vers lesquelles ré aiguiller les données de communication.

Chaque ligne de la table de filtres 64 associe à un nom de filtre répertorié en colonne 68, une combinaison logique de règles répertoriée sur une même ligne en colonne 69. Chaque nom de filtre répertorié en colonne 67 d'une table de lien, est répertorié une fois et une seule en colonne 68 de la table 64, à l'exception éventuelle du nom "déf" qui correspond en fait à une tautologie.

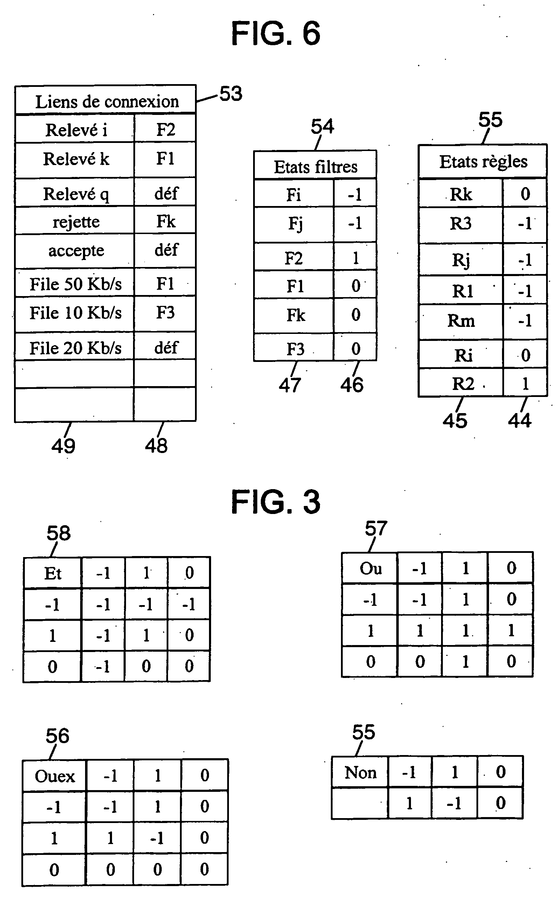

Les combinaisons logiques de la colonne 69, utilisent des opérateurs logiques à trois états définis conformément à des tables de vérité 55, 56, 57, 58 expliquées en référence à la figure 3. Un argument d'opérateur logique, a trois états possibles, un état dit invalide indiqué ici par la valeur -1, un état dit valide indiqué ici par la valeur 1 et un état dit incertain indiqué ici par la valeur 0.

La table 58 est la table de vérité de l'opérateur logique "Et" qui donne l'état valide pour deux arguments à l'état valide, l'état invalide pour un argument à l'état invalide et qui donne l'état incertain dans les autres cas.

La table 57 est la table de vérité de l'opérateur logique "Ou" qui donne l'état valide pour un argument à l'état valide, l'état invalide pour deux arguments à l'état invalide et qui donne l'état incertain dans les autres cas.

La table 56 est la table de vérité de l'opérateur logique "Ouex" (Xor en anglais pour le ou exclusif) qui donne l'état valide pour un argument à l'état valide et un argument à l'état invalide, l'état invalide pour deux arguments à l'état invalide ou deux arguments à l'état valide et qui donne l'état incertain dans les autres cas.

La table 55 est la table de vérité de l'opérateur logique unaire "Non" qui donne l'état valide pour un argument à l'état invalide, l'état invalide pour un argument à l'état valide et qui donne l'état incertain pour un argument à l'état incertain.

Dans la colonne 69 de la table 64 représentée en figure 2, une combinaison logique commence par un opérateur logique applicable à un ou deux arguments. Chaque argument est lui-même un nom de règle ou une combinaison logique de façon à décrire un arbre d'opérations logiques dont les branches terminent toutes par un nom de règle.

Les noms de règles utilisés dans la colonne 69 de la table 64, sont répertoriés une et une seule fois dans une colonne 59 de la table 65. La table de règles 65 associe à chaque nom de règle, une expression de vérification sur un attribut protocolaire, contenue en colonne 60 sur une même ligne que celle du nom de règle contenu en colonne 59. La table de règle est améliorée en associant à chaque nom de règle, une indication de sens naturel ou antinaturel, contenue en colonne 39 sur une même ligne que celle du nom de règle contenu en colonne 59. Le sens naturel indique que la valeur d'attribut protocolaire est extractible de données de communication qui appartiennent à une connexion courante pour laquelle la règle est activable. Le sens antinaturel indique que la valeur d'attribut protocolaire est extractible de données de communication qui appartiennent à une connexion paire de la connexion courante pour laquelle la règle est activable.

Un attribut protocolaire est un paramètre véhiculé par un protocole donné au sein d'une pile protocolaire. Préférentiellement, chaque attribut protocolaire est spécifié par trois éléments syntaxiques. Le premier élément syntaxique comprend une chaîne de noms de protocoles où éventuellement un ou plusieurs caractères * indique que tout nom ou toute partie de chaîne de noms, convient. Le deuxième élément syntaxique comprend une marque pour mettre en évidence le nom de protocole qui utilise le paramètre dans la chaîne, par exemple une mise entre crochets de ce nom de protocole ou par défaut la qualité de dernier nom dans la chaîne. Le troisième élément syntaxique comprend le nom de paramètre utilisé. Par exemple l'attribut *.ip.ip:saddr représente l'adresse source d'un paquet ip encapsulé, l'attribut *.[ip].ip:saddr représente l'adresse source d'un paquet ip de niveau le plus bas. Un nom de paramètre peut désigner un numéro de port source ou destination des protocoles TCP et UDP. Un nom de paramètre peut aussi désigner un nom de serveur hôte pour le protocole http, un débit de transfert demandé, un nom de protocole explicite transporté ou encore une expression de sous réseau telle que déterminée par SNET.

Le paramètre peut être relatif à une partie quelconque des données de communication numérique. Le paramètre n'est pas nécessairement relatif aux signaux qui codent des informations protocolaires propres à définir des flots syntaxiques. Le paramètre peut aussi être relatif aux données utiles telles que précédemment nomées.

Avantageusement, les attributs protocolaires sont typés de façon à permettre au système d'effectuer des opérations logiques, arithmétiques et comparatives génériques à l'ensemble des protocoles supportés. On peut citer le type Entier signé / non signé / 8, 16, 32, 64 bits, le type Adresse Mac, le type Adresse IP / Masque de sous réseau, le type Chaîne de caractères, le type Unité de temps, le type Chaîne binaire. Par exemple, le port d'un paquet UDP, spécifié par BASE.*.UDP:SPORT, est de type uint16 pour entier non signé sur 16 bits. Une adresse de courrier électronique du protocole IMAP, spécifiée par *.IMAP:SENDER, est définie par une chaîne de caractères.

Une règle est une condition sur un attribut protocolaire. L'état d'une règle est valable pour l'ensemble des données de communication numérique d'une même connexion. L'expression de vérification fait intervenir un opérateur de comparaison sur une valeur de l'attribut protocolaire concerné en fonction de son type, tel que = pour une égalité, >, <, >=, <= pour une relation d'ordre, != pour une inégalité, ∼ pour un opérateur de validation d'expression régulière.

Dans l'exemple présenté sur la figure 2, la règle nommée R1 est à l'état valide si l'attribut protocolaire nommé Attribut1 a une valeur égale à valeur1, à l'état invalide si les valeurs sont différentes et à l'état incertain si la valeur de l'attribut protocolaire n'est pas connue. La règle nommée R2 est à l'état valide si l'attribut protocolaire nommé Attribut2 a une valeur strictement inférieure à valeur1, à l'état invalide si la valeur de l'attribut protocolaire n'est pas strictement inférieure à valeur1 et à l'état incertain si la valeur de l'attribut protocolaire n'est pas connue. Ainsi, la table 65 définit de façon similaire l'ensemble des règles utilisables dans la table 64. Par exemple, la règle nommée Ri est à l'état valide si l'attribut protocolaire nommé Attribut i a une valeur qui satisfait une expression régulière de valeur X. Parmi les expressions régulières connues, on peut citer à titre illustratif celles exprimées sous forme de chaînes de caractères qui comportent des caractères spéciaux qui peuvent être remplacés par un caractère ou une chaîne de caractères quelconques, qui indiquent un format (présence d'un nombre entier, d'une date, d'une valeur financière) ou qui référence un type de données (nombre, adresse, chaîne de caractères), à l'état invalide si les valeurs ne satisfont pas l'expression régulière et à l'état incertain si la valeur de l'attribut protocolaire n'est pas connue.

On remarque que les filtres sont des fonctions logiques de règles. Pour valider un filtre, une solution possible consiste à faire interpréter le filtre par le moteur de filtrage chaque fois que le filtre est appelé. De façon avantageuse, les filtres sont préalablement compilés en format binaire sous forme d'arbre syntaxique plus facilement exécutable. Par exemple, les noms de règles sont remplacés chacun par un pointeur en format binaire directement sur la ligne de la table 65 qui correspond au nom de règle. L'arbre syntaxique est lui-même optimisé pour réduire la place mémoire et pour augmenter la vitesse d'exécution.

Les contenus des tables 61 à 65 peuvent préexister dans la base de donnée 6. Avantageusement, la base de données 6 est couplée à une interface homme-machine agencée pour permettre à l'utilisateur du système d'enrichir le contenu de ces tables à partir et au delà d'un contenu préexistant, voire initialement vide.

De façon à permettre à l'utilisateur de définir une nouvelle action à déclencher pour un flot sémantique particulier, l'interface homme-machine est agencée pour proposer sous forme de menu déroulant, une première nomenclature vide ou non vide de noms de tables de liens existants à laquelle est jointe une première option de création de nouveau nom de table de liens. L'interface homme-machine est agencée pour ouvrir une première fenêtre lorsque l'utilisateur sélectionne la première option de création, pour ajouter dans la première nomenclature un nom de table de liens que l'utilisateur saisit dans la fenêtre et pour générer dans la base de données 6, une nouvelle table de liens initialement vide nommée par le nom saisi.

L'interface homme-machine est agencée pour proposer sous forme de menu déroulant après sélection ou ajout d'un nom de table de liens dans la première nomenclature, une deuxième nomenclature vide ou non vide de noms d'actions existants dans la table de liens sélectionnée ou ajoutée. Une deuxième option de création de nouveau nom d'action est jointe à la deuxième nomenclature dans le menu déroulant. L'interface homme-machine est agencée pour ouvrir une deuxième fenêtre lorsque l'utilisateur sélectionne la deuxième option de création, pour ajouter dans la deuxième nomenclature un nom d'action que l'utilisateur saisit dans la fenêtre et pour générer dans la base de données 6, une structure de données qui définit l'action nommée par le nom saisi. L'interface homme-machine est agencée pour insérer selon un ordre de priorité défini par l'utilisateur, le nom d'action, sélectionné ou créé dans la table de liens courante.

L'interface homme-machine est agencée pour proposer sous forme de menu déroulant après sélection ou insertion d'un nom d'action dans la deuxième nomenclature, une troisième nomenclature vide ou non vide de noms de filtres existants dans la table de filtres 64. Une troisième option de création de nouveau nom de filtre est jointe à la troisième nomenclature dans le menu déroulant. L'interface homme-machine est agencée pour ouvrir une troisième fenêtre lorsque l'utilisateur sélectionne la troisième option de création, pour ajouter dans la troisième nomenclature un nom de filtre que l'utilisateur saisit dans la fenêtre et pour générer dans la colonne 69 de la table 64, une combinaison logique qui définit le filtre nommé par le nom saisi. L'interface homme-machine est agencée pour associer au nom d'action inséré dans la table de liens, le nom de filtre, sélectionné ou créé dans la troisième nomenclature.

De façon à générer la combinaison logique, l'interface homme-machine est agencée pour proposer sous forme de menu déroulant, une quatrième nomenclature vide ou non vide de noms existants de règles dans la table 65. Une quatrième option de création de nouveau nom de règle à ajouter dans la combinaison logique, est jointe à la quatrième nomenclature dans le menu déroulant. L'interface homme-machine est agencée pour ouvrir une quatrième fenêtre lorsque l'utilisateur sélectionne la quatrième option de création, pour ajouter dans la quatrième nomenclature le nom de règle que l'utilisateur saisit dans la fenêtre et pour générer dans la colonne 60 de la table 65, une expression de vérification qui définit la règle nommée par le nom saisi. La quatrième fenêtre est améliorée par la possibilité offerte à l'utilisateur de préciser le sens naturel ou antinaturel de la règle qui est alors stocké en colonne 39 de la table 65. L'interface homme-machine est agencée pour introduire chaque nom de règle sélectionnée ou ajoutée dans la quatrième nomenclature, comme argument d'un opérateur logique dans la combinaison logique.

De façon à générer l'expression de vérification, l'interface homme-machine est agencée pour proposer sous forme de menu déroulant, une cinquième nomenclature vide ou non vide de noms existants d'attributs protocolaires, à laquelle est jointe une cinquième option de création de nouveau nom d'attribut protocolaire à faire intervenir dans l'expression de vérification. L'interface homme-machine est agencée pour ouvrir une cinquième fenêtre lorsque l'utilisateur sélectionne la cinquième option de création, pour ajouter dans la cinquième nomenclature le nom d'attribut protocolaire que l'utilisateur saisit dans la fenêtre. L'interface homme-machine est agencée pour concaténer dans la colonne 60 de la table 65, un opérateur de comparaison suivi d'une valeur typée, au nom d'attribut protocolaire sélectionné ou ajouté dans la cinquième nomenclature.

Lorsque l'interface homme-machine détecte que l'expression de vérification générée pour un nom de règle ajouté à la quatrième nomenclature, est identique à une expression de vérification pour un nom de règle préexistant dans la table 65, l'interface homme-machine n'ajoute pas le nom de règle dans la quatrième nomenclature mais se positionne sur le nom de règle préexistant et ne génère pas de nouvelle expression de vérification en colonne 60 de la table 65 de façon à ce que chaque règle soit décrite une et une seule fois en table 65.

Lorsque l'interface homme-machine détecte que la combinaison logique générée pour un nom de filtre ajouté à là troisième nomenclature, est identique à une combinaison logique pour un nom de filtre préexistant dans la table 64, l'interface homme-machine n'ajoute pas le nom de filtre dans la troisième nomenclature mais se positionne sur le nom de filtre préexistant et ne génère pas de nouvelle combinaison logique en colonne 69 de la table 64 de façon à ce que chaque filtre soit décrit une et une seule fois en table 64.

L'interface homme-machine couplée à la base de données 6, permet ainsi à l'utilisateur ou de choisir de définir avec souplesse les actions à déclencher sur des données de communication numérique et les flots sémantiques auxquels appartiennent les données sur lesquelles déclencher les actions. Comme expliqué par la suite, ce seront celles des connexions pour lesquelles les attributs protocolaires valident les filtres auxquels ces données seront soumises.

De façon particulière dans le système décrit en référence à la figure 1, la table 5 comprend sur chaque ligne, un pointeur vers une structure de données 50, 51, 52 agencée pour mémoriser des états attribués à la connexion courante répertoriée dans la ligne correspondante de la table 5.

Chaque structure de données 50, 51, 52, comprend une table de liens de connexions 53, une table d'états de filtres 54 et une table d'états de règles 55. Chaque ligne de la table 53 est attribuée à une table de liens 61, 62, 63 différente dont un nom d'action la plus prioritaire parmi les actions qui restent possibles à déclencher, est répertorié en colonne 49. A chaque nom d'action répertorié en colonne 49, est associé en colonne 48, un état soit valide, soit indéterminé. Chaque ligne de la table 54 est attribuable à un filtre différent dont le nom est répertorié en colonne 47. A chaque nom de filtre répertorié en colonne 47, est associé en colonne 46, un état soit valide, soit invalide, soit indéterminé. Chaque ligne de la table 55 est attribuable à une règle dont le nom est répertorié en colonne 45. A chaque nom de règle répertorié en colonne 45, est associé en colonne 44, un état soit valide, soit invalide, soit indéterminé.

A la création d'une ligne de la table 5 pour une nouvelle connexion détectée dans les données de communication numérique, la table de liens 53 est initialisée avec une image qui reprend la totalité des lignes des tables de liens 61, 62, 63 de sorte à contenir en colonne 49 chaque nom d'action de chaque table de liens 61, 62, 63, et en colonne 48 chaque nom de filtre associé. Les tables 54 et 55 sont initialement vides.

La configuration des tables 53, 54 et 55, représentée en figure 6 est celle en cours de traitement d'une connexion dont l'évolution sera décrite ultérieurement.

Le système décrit en référence à la figure 1, comprend pour chaque protocole utilisable, une interface d'attributs protocolaires 40, 41, 42, 43. Chaque interface d'attributs protocolaires, est attribuée à un protocole spécifique. Pour ce protocole spécifique, l'interface d'attributs protocolaires est agencée pour extraire parmi les données de communication, une valeur de paramètre tel que spécifié dans un attribut protocolaire qui indique ce protocole spécifique comme utilisant ce paramètre. De façon avantageuse, l'interface homme-machine est agencée pour demander à l'utilisateur de charger une interface d'attributs protocolaire adaptée lorsqu'un nom d'attribut protocolaire est ajouté dans la cinquième nomenclature et qu'il n'existe pas d'interface d'attribut protocolaire agencée pour restituer une valeur de paramètre. Le système est ainsi configurable avec souplesse pour tenir compte de toute modification d'architecture protocolaire.

On notera que la définition des actions et des flots sémantiques à l'aide de la base de données 6 d'une part et la définition des architectures protocolaires possibles à l'aide des interfaces d'attributs protocolaires d'autre part sont réalisables de façon indépendante.

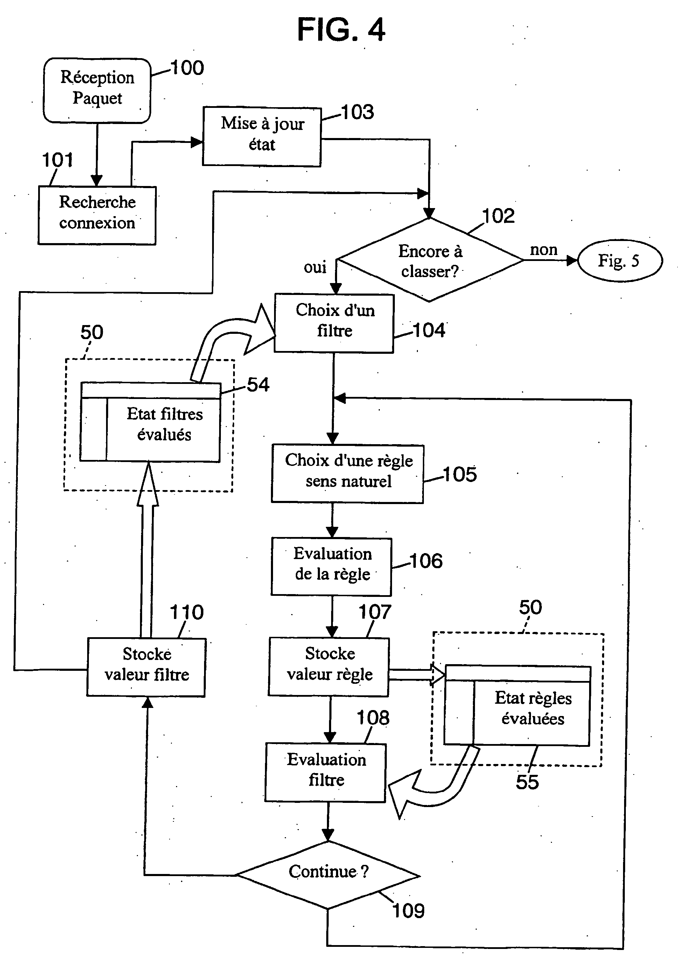

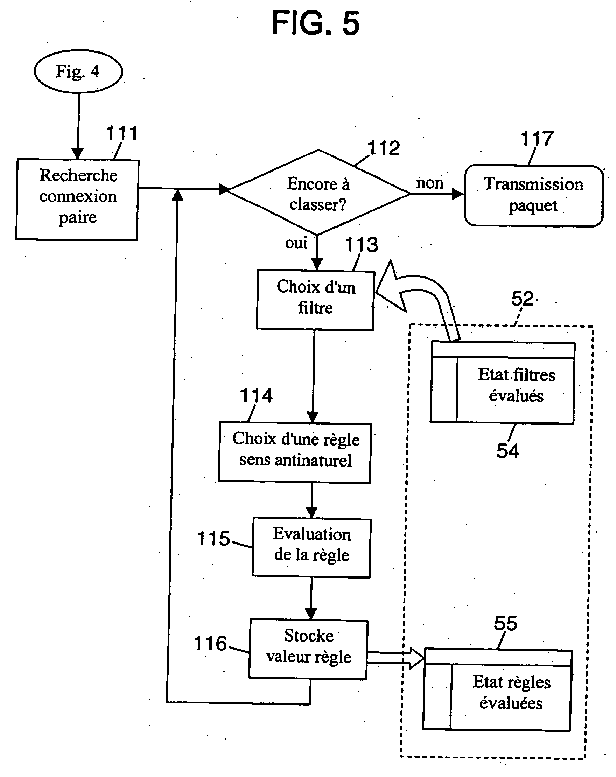

Le moteur de filtrage 1 est agencé pour accéder en lecture à la table 5 et à la base de données 6, pour accéder en lecture et en écriture aux structures de données 50, 51, 52 et pour activer les interfaces d'attributs protocolaires 40, 41, 42, 43, de façon à exécuter le procédé décrit maintenant en référence aux figures 4 et 5.

Le procédé est ici décrit pour le cas particulier où les données de communication sont transmises par paquet dans une étape 100. Son avantage est de pouvoir traiter les données de communication en temps réel au fur et à mesure de leur réception par paquet sans avoir à mémoriser ces paquets. L'homme du métier n'aurait aucune difficulté pour adapter le procédé à un traitement global (batch en anglais) de données de communications par exemple journalisées, les étapes restant sensiblement les mêmes. La distinction est plus dans les actions à déclencher, celles de tables de liens de pare-feu et de liens de service, étant plus intéressantes pour un traitement en temps réel, celles de tables de liens de mesure ou de liens de compression, étant aussi intéressantes dans le cadre d'un traitement en temps réel que dans le cadre d'un traitement statique.

Lorsqu'un paquet se présente au moteur de filtrage 1 en étape 100, il est accompagné d'une référence à la ligne de la table 5 qui correspond à la connexion courante à laquelle appartient le paquet.

La référence qui accompagne le paquet permet au moteur de filtrage 1 de rechercher en étape 101, le pointeur sur celle des structures de données 50, 51, 52 qui est associée à la connexion courante. La référence 50 utilisée dans la figure 4 est par exemple pour le cas où la structure de données pointée est la structure de données 50 mais les explications qui suivent restent valables pour toute autre structure de données.

Dans une étape 103 de mise à jour, le moteur de filtrage supprime dans la table 54 et dans la table 55, toutes les lignes dont l'état contenu en colonne 46, respectivement en colonne 44, est incertain car les règles et filtres correspondants sont à réévaluer pour les données de communication courantes.

Dans une étape 102, le moteur de filtrage 1 scrute ligne à ligne la table 53 en commençant par la première ligne. Pour chaque ligne scrutée, le moteur de filtrage 1 recherche dans la colonne 47 de la table 54, le nom de filtre référencé par la colonne 48 de la ligne de la table 53 scrutée.

Lorsque aucune ligne de la table 54 ne contient le nom de filtre en colonne 47, le moteur de filtrage 1 ajoute une ligne à la table 54 avec le nom de filtre en colonne 47. La connexion courante est alors encore à classer en ce qui concerne un flux sémantique déterminé par le filtre dont le nom est ajouté en colonne 47. Dans ce cas, le moteur de filtrage 1 déclenche une succession d'étape 104 à 110 pour évaluer le filtre avant de revenir à l'étape 102.

Lorsque la ligne de la table 54 contient le nom de filtre avec un état invalide (-1) en colonne 46, le moteur de filtrage 1 supprime la ligne de la table 53 qui contient ce nom de filtre en colonne 48. Le moteur de filtrage 1 teste ensuite s'il existe une ligne suivante dans la table 53. S'il n'existe pas de ligne suivante dans la table 53, le moteur de filtrage 1 sort du processus décrit en référence à la figuré 4 car il n'y a plus lieu de classer la connexion courante en terme de flot sémantique. S'il existe une ligne suivante dans la table 53, cette ligne est scrutée pour continuer à exécuter l'étape 102 comme décrit précédemment et subséquemment.

Lorsque la ligne de la table 54 contient le nom de filtre avec un état incertain (0) en colonne 46, le moteur de filtrage 1 teste s'il existe une ligne suivante dans la table 53. S'il n'existe pas de ligne suivante dans la table 53, le moteur de filtrage 1 sort du processus décrit en référence à la figure 4 car il n'y a plus lieu de classer la connexion courante en terme de flot sémantique. S'il existe une ligne suivante dans la table 53, cette ligne est scrutée pour continuer à exécuter l'étape 102 comme décrit précédemment et subséquemment.

Lorsque la ligne de la table 54 contient le nom de filtre avec un état valide (+1) en colonne 46, le moteur de filtrage 1 supprime les lignes de la table 53 qui contiennent en colonne 49, des noms d'action moins prioritaires que celle de la ligne actuellement scrutée. Le moteur de filtrage 1 teste ensuite s'il existe une ligne suivante dans la table 53. S'il n'existe pas de ligne suivante dans la table 53, le moteur de filtrage 1 sort du processus décrit en référence à la figure 4 car il n'y a plus lieu de classer la connexion courante en terme de flot sémantique. S'il existe une ligne suivante dans la table 53, cette ligne est scrutée pour continuer à exécuter l'étape 102 comme décrit précédemment.

Dans l'étape 104, le moteur de filtrage 1 pointe la ligne de la table 64 qui contient le même nom de filtre en colonne 68 qu'en colonne 47 de la table 54 de façon à obtenir en colonne 69, la combinaison logique de règles nécessaire pour évaluer le filtre. Le moteur de filtrage 1 déclenche ensuite une succession d'étapes 105 à 109 pour des règles prises comme arguments d'opérateurs logiques dans la combinaison logique, réitérée jusqu'à avoir considéré toutes les règles de la combinaison logique ou jusqu'à obtenir une évaluation du filtre sur un état déterministe valide ou invalide.

Dans l'étape 105, le moteur de filtrage 1 recherche dans la table 55, les lignes qui contiennent les noms de règle en colonne 45 jusqu'à arriver sur un nom de règle qui n'est pas contenu dans une ligne de la table 55.

Lorsqu'un nom de règle n'est pas contenu dans une ligne de la table 55, le moteur de filtrage 1 ajoute une ligne à la table 55 avec le nom de règle en colonne 45. Si la règle est de sens dit antinaturel, le moteur de filtrage 1 range une valeur 0 d'état incertain en colonne 44 de la ligne car les données nécessaires à l'évaluation de cette règle ne sont pas présentes dans la connexion courante mais dans la connexion paire. Si la règle est de sens dit naturel, le moteur de filtrage déclenche l'étape 106 d'évaluation de la règle.

Dans l'étape 106, le moteur de filtrage 1 accède à la ligne de la table 65 qui contient en colonne 59, le même nom de règle que la colonne 45 de la ligne ajoutée dans la table 55, de façon à charger l'expression de vérification qui est associée en colonne 60. Le moteur de filtrage soumet le nom d'attribut protocolaire à celle des interfaces protocolaires 40, 41, 42, 43 qui est attribuée au protocole spécifié par la syntaxe de l'attribut protocolaire. L'interface protocolaire recherche alors dans les données de communication courantes, la valeur de l'attribut protocolaire. Si l'interface protocolaire trouve la valeur de l'attribut protocolaire soumis, elle transmet cette valeur au moteur de filtrage et mémorise cette valeur dans un registre dédié à la connexion courante. Si l'interface protocolaire ne trouve pas la valeur de l'attribut protocolaire soumis, elle transmet au moteur de filtrage, un signal qui indique que la valeur n'est pas trouvée.

Lorsque l'interface protocolaire transmet le signal qui indique que la valeur n'est pas trouvée, le moteur de filtrage évalue la règle comme étant à l'état incertain.

Lorsque l'interface protocolaire transmet la valeur de l'attribut protocolaire, le moteur de filtrage évalue la règle comme étant à l'état valide si la valeur transmise satisfait la condition de l'expression de vérification et comme étant à l'état invalide si la valeur transmise ne satisfait pas la condition de l'expression de vérification.

Dans l'étape 107, le moteur de filtrage, stocke l'état de la règle évaluée dans la colonne 44 correspondante de la table 55.

Dans l'étape 108 d'évaluation du filtre, le moteur de filtrage 1 applique la combinaison logique contenue en colonne 69, aux états de règles contenus en colonne 60, conformément aux tables de vérité 55, 56, 57, 58.

Dans l'étape 109, le moteur de filtrage 1 teste si l'état du filtre évalué est incertain et s'il reste des règles à évaluer pour la combinaison logique du filtre.

Dans le cas où l'état du filtre évalué est incertain et qu'il reste des règles à évaluer pour la combinaison logique du filtre, le moteur de filtrage revient à l'étape 104 en se positionnant sur la règle suivante à évaluer dans la combinaison logique.

Dans le cas contraire, le moteur de filtrage déclenche l'étape 110.

Dans l'étape 110, le moteur de filtrage stocke l'état du filtre évalué en colonne 46 de la table 54 avant de revenir à l'étape 102 pour en continuer l'exécution.

Lorsque le moteur de filtrage 1 sort du processus décrit en référence à la figure 4, il entre de façon plus particulièrement avantageuse dans le processus décrit en référence à la figure 5. Le processus décrit en référence à la figuré 5 permet de tenir compte d'informations contenues dans les données de communication qui sont utiles pour déterminer des flots sémantiques dans lesquels classer la connexion paire de la connexion courante.

Dans une étape 111, le moteur de filtrage 1 recherche la connexion paire répertoriée dans la table 5. La table 5 comprend sur la ligne de la connexion paire, un pointeur vers une structure de données différente de celle de la connexion courante, supposons pour fixer les explications que le pointeur est vers la structure de données 52.

Une succession d'étapes 114 à 116 est déclenchée pour chaque règle dite de sens antinaturel dont le nom et répertorié en colonne 45 de la table 55 de la structure de données 52.

Dans l'étape 114, le moteur de filtrage 1 choisit une règle de sens antinaturel qui sont à évaluer ou à réévaluer. Une considération des règles à évaluer ou à réévaluer comme étant celles dont l'état est incertain, permet de maintenir une bonne rapidité de traitement en restreignant le nombre de règles à évaluer. Une considération des règles à évaluer ou à réévaluer comme étant toutes celles de sens antinaturel, permet de prendre en compte une éventuelle modification de valeur d'attribut protocolaire qui pourrait changer l'état de la règle.

Dans l'étape 115 d'évaluation de la règle, le moteur de filtrage soumet le nom d'attribut protocolaire de l'expression de vérification, à l'interface protocolaire attribuée au protocole spécifié par la syntaxe de l'attribut protocolaire. Si l'interface protocolaire retourne une valeur d'attribut protocolaire, le moteur de filtrage calcule l'état de la règle en appliquant l'expression de vérification à la valeur retournée. Si l'interface protocolaire ne retourne pas de valeur d'attribut protocolaire, le moteur de filtrage laisse l'état de la règle inchangé.

Dans l'étape 116, le moteur de filtrage 1 stocke l'état de la règle en colonne 44 de la table 55 de la structure de donnée 52.

De façon à restreindre l'évaluation de règles de sens antinaturel aux seules règles nécessaires pour compléter la classification de la connexion paire dans un ou plusieurs flots sémantiques, une étape 112 est prévue pour déterminer si la connexion paire est encore à classer.

Dans l'étape 112, le moteur de filtrage recherche dans la table 54 de la structure de données 52, les noms de filtre dont l'état en colonne 46, est incertain. Pour chaque nom de filtre dont l'état est incertain, le moteur de filtrage déclenche une étape 113. Lorsque la recherche dans la table 54 est terminée, le moteur de filtrage déclenche une étape 117.

Dans l'étape 113 correspondant au choix d'un filtre dont le nom est associé en table 54 à un état indéterminé, le moteur de filtrage considère les noms de règles de la combinaison logique associée à ce nom de filtre dans la table 64 et exécute la succession d'étapes 114 à 116 pour chaque nom de règle de sens antinaturel.

L'appartenance d'une connexion à un flot sémantique peut varier au cours du temps. Ceci peut par exemple se produire en cas de multiplexage de plusieurs connexions de bout en bout sur une même connexion de niveau inférieur ou encore du transfert sur une connexion à un moment donné d'images puis à un autre moment de texte lié à ses images avec une signification sémantique différente pour les images et pour le texte.

Les performances du procédé selon l'invention sont augmentées par les améliorations de l'étape 103 décrites à présent.

Dans l'étape 103 de mise à jour, les données de communication contenues dans le paquet sont explorées par chaque interface protocolaire 40, 41, 42, 43, ayant déjà été interrogée par le moteur de filtrage 1 pour la connexion courante à laquelle appartient le paquet. Lorsque l'interface protocolaire détecte un changement de valeur pour un attribut protocolaire dont elle a précédemment communiqué la valeur au moteur de filtrage, l'interface protocolaire notifie au moteur de filtrage, le nom de l'attribut protocolaire pour lequel la valeur a changé.

Le moteur de filtrage détermine alors la ou les règles qui utilisent cet attribut protocolaire dans la table 65, le ou les filtres qui utilisent cette ou ces règles dans la table 64 puis chaque action dont le nom est associé à un nom de filtre ainsi déterminé dans la ou les tables de liens 61, 62, 63.

Pour chaque nom d'action ainsi déterminée, le moteur de filtrage 1 décide d'ajouter ou de ne pas ajouter une ligne dans la table 53 en fonction des critères qui suivent.

Lorsque plusieurs actions de la table de liens, par exemple 61, peuvent être déclenchées simultanément, le moteur de filtrage insère dans la table 53 en respectant l'ordre défini par la table de liens 61, une copie de la ligne qui correspond au nom d'action déterminée dans la table 61. Si une copie de cette ligne existe déjà dans la table 53, le moteur de filtrage supprime la ligne de filtre correspondante dans la table 54 de façon à commander une nouvelle évaluation du filtre si besoin est.

Lorsqu'une seule action de la table de liens, par exemple 62 ou 63, est déclenchable, à savoir l'action la plus prioritaire avec l'état valide ou l'action par défaut, le moteur de filtrage insère dans la table 53 en respectant l'ordre défini par la table de liens 62, 63, une copie de la ligne qui correspond au nom d'action déterminée dans la table 61 si et seulement si l'action déterminée est plus prioritaire que l'action déclenchable. Si une copie de cette ligne existe déjà dans la table 53, le moteur de filtrage supprime la ligne de filtre correspondante dans la table 54 de façon à commander une nouvelle évaluation du filtre si besoin est.

L'étape 117 est exécutée lorsque toutes les règles de sens qui le nécessitent, ont été évaluées dans le processus décrit en référence à la figure 4 pour les règles de sens naturel et de façon supplémentaire dans le processus décrit en référence à la figure 5 pour les règles de sens antinaturel.

Dans l'étape 117, le moteur de filtrage transmet le paquet reçu au moteur d'actions 2.

Le moteur d'actions 2 pointe sur la table 53 de la structure de données 50 de la connexion courante. En fonction des étals associés en table 54 aux noms de filtres associés en table 53 aux noms d'actions, le moteur d'actions 2 décide des actions à déclencher ou à ne pas déclencher.

Lorsque plusieurs actions de la table de liens, par exemple 61, peuvent être déclenchées simultanément, le moteur d'action déclenche toutes les actions dont le nom est associé en table 53 à un nom de filtre à l'état valide en table 54 ou lorsqu'il n'existe aucune action dont le nom est associé en table 53 à un nom de filtre à l'état valide en table 54, toutes les actions dont le nom est associé en table 53 à un nom de filtre à l'état incertain en table 54 ou une action par défaut selon une politique de déclenchement prédéfinie pour cette table de liens.

Lorsqu'une seule action de la table de liens, par exemple 62 ou 63, est déclenchable, à savoir l'action la plus prioritaire avec l'état valide ou l'action par défaut, le moteur d'actions 2 déclenche l'action dont le nom est associé en table 53 à un nom de filtre à l'état valide en table 54 ou lorsqu'il n'existe aucune action dont le nom est associé en table 53 à un nom de filtre à l'état valide en table 54, l'action par défaut.

Le moteur d'actions déclenche chaque action en conformité avec la définition qui en est donnée dans la base de données 6. Comme vu précédemment, certaines actions déclenchées sont susceptibles de modifier le contenu de l'entête ou du corps du paquet. Ensuite, le moteur d'actions 2 transfère en sortie 7, le paquet ayant subit les différentes actions déclenchées.

## Revendications

1. Procédé pour déclencher au moyen d'un dispositif de traitement numérique (1,2), au moins une action sur des données de communication numérique lorsqu'elles appartiennent à un même flot sémantique pour lequel ladite action est prévue, **caractérisé en ce qu'**il comprend des étapes dans lesquelles:
- ledit dispositif (1,2) est alimenté avec au moins un filtre à trois états possibles qui résultent d'une ou plusieurs conditions sur un ou plusieurs attributs protocolaires spécifiés pour ledit flot sémantique, un état dit valide correspondant à des valeurs d'attribut protocolaire qui confirment que la ou les dites conditions sont vérifiées, un état dit invalide correspondant à des valeurs d'attribut protocolaire qui confirment que la ou les dites conditions ne sont pas vérifiées, un état dit incertain correspondant à une absence de valeurs d'attribut protocolaire pour confirmer que la ou les dites conditions sont ou ne sont pas vérifiées, chaque attribut protocolaire étant spécifié par une suite ordonnée de noms de protocoles utilisés dans le flot sémantique et par un nom de paramètre véhiculé par un protocole dont le nom est indiqué dans ladite suite ordonnée de noms de protocoles;
- le dispositif de traitement numérique (1) applique (108) le filtre à trois états, sur les dites données de communication tant que ces données n'ont pas procuré de valeurs d'attribut protocolaire autres que celles dont résulte ledit état incertain du filtre;
- le dispositif de traitement numérique (2) déclenche ladite action lorsque ledit état valide du filtre résulte de valeurs d'attribut protocolaire procurées par les données de communication.

2. Procédé selon la revendication 1, **caractérisé en ce que**, pour appliquer le filtre sur lesdites données de communication,
- le dispositif de traitement numérique (1) envoie successivement l'un des dits attributs protocolaires à une interface protocolaire (40, 41, 42, 43) attribuée au protocole indiqué dans la suite ordonnée de noms de protocoles, (109) jusqu'à ce que l'état du filtre soit valide ou invalide ou jusqu'à avoir envoyé tous les attributs protocolaires,
- l'interface protocolaire (40, 41, 42, 43) recherche dans les données de communication, la valeur du paramètre spécifié et transmet cette valeur au dispositif de traitement numérique s'il la trouve,
- le dispositif de traitement numérique (1) évalue l'état du filtre qui correspond à la valeur ou à l'absence de valeur transmise par l'interface protocolaire (40, 41, 42, 43).

3. Procédé selon la revendication 1 ou 2, **caractérisé en ce que** chaque filtre pour alimenter ledit dispositif de traitement numérique, est défini par une combinaison logique de règles dans une première table (64), chaque règle étant définie dans une deuxième table (65) par une expression de vérification comprenant au moins un opérateur de comparaison dont un argument est l'attribut protocolaire.

4. Procédé selon les revendications 2 et 3, **caractérisé en ce que** pour évaluer l'état du filtre qui correspond à la valeur ou à l'absence de valeur transmise par l'interface protocolaire, le dispositif de traitement numérique évalue l'état d'au moins une règle dans la combinaison logique en fonction de la transmission de valeur puis l'état donné par la combinaison logique appliquée aux états évalués de règles.

5. Procédé selon l'une des revendications précédentes, **caractérisé en ce qu'**il comprend une étape (103) dans laquelle les données de communication numérique sont scrutées pour détecter tout changement de valeur d'un attribut protocolaire de façon à permettre d'évaluer un changement d'état du filtre qui correspond au changement de valeur.

6. Système informatique pour déclencher au moins une action sur des données de communication numérique lorsqu'elles appartiennent à un même flot sémantique pour lequel ladite action est prévue, **caractérisé en ce qu'**il comprend:
- un dispositif de traitement numérique constitué d'un moteur de filtrage (1) et d'un moteur d'actions (2);
- une base de données (6) pour alimenter le moteur de filtrage (1) avec au moins un filtre à trois états possibles qui résultent d'une ou plusieurs conditions sur un ou plusieurs attributs protocolaires spécifiés pour ledit flot sémantique,
- au moins une structure de données (50, 51, 52) pour répertorier un état dit valide correspondant à des valeurs d'attribut protocolaire qui confirment que la ou les dites conditions sont vérifiées, un état dit invalide correspondant à des valeurs d'attribut protocolaire qui confirment que la ou les dites conditions ne sont pas vérifiées, un état dit incertain correspondant à une absence de valeurs d'attribut protocolaire pour confirmer que la ou les dites conditions sont ou ne sont pas vérifiées, chaque attribut protocolaire étant spécifié par une suite ordonnée de noms de protocoles utilisés dans le flot sémantique et par un nom de paramètre véhiculé par un protocole dont le nom est indiqué dans ladite suite ordonnée de noms de protocoles;
- des moyens (100) de réception des données de communication, utilisables par le moteur de filtrage (1) pour appliquer chaque filtre nécessaire sur les dites données de communication tant que ces données n'ont pas procuré de valeur d'attribut protocolaire autres que celles dont résulte ledit état incertain du filtre;
- des moyens de transmission (117) des données de communication, utilisables par le moteur d'action (2) pour déclencher ladite action lorsque ledit état valide est contenu dans la structure de données (50, 51, 52).

7. Système informatique selon la revendication 6, **caractérisé en ce qu'**il comprend une interface protocolaire (40, 41, 42, 43) attribuée à chaque protocole utilisable dans le flot sémantique, agencée pour recevoir du moteur de filtrage (1), les attributs protocolaires définis pour le protocole auquel l'interface protocolaire est attribuée;
- l'interface protocolaire (40, 41, 42, 43) étant agencée pour rechercher dans les données de communication, la valeur du paramètre spécifié et pour transmettre cette valeur au moteur de filtrage (1) s'il la trouve,
- le moteur de filtrage (1) étant agencé pour évaluer l'état du filtre qui correspond à la valeur ou à l'absence de valeur transmise par l'interface protocolaire (40, 41, 42, 43).

8. Système informatique selon la revendication 6 ou 7, **caractérisé en ce que** la base de données (6) comprend une première table (64) qui contient une combinaison logique de règles pour chaque filtre, et une deuxième table (65) qui contient pour chaque règle, une expression de vérification comprenant au moins un opérateur de comparaison dont un argument est l'attribut protocolaire.

9. Système informatique selon les revendications 7 et 8, **caractérisé en ce que** pour évaluer l'état du filtre qui correspond à la valeur ou à l'absence de valeur transmise par l'interface protocolaire, le dispositif de traitement numérique est agencé pour évaluer l'état d'au moins une règle dans la combinaison logique en fonction de la transmission de valeur puis l'état donné par la combinaison logique appliquée aux états évalués de règles.

10. Système informatique selon l'une des revendications 6 à 9, **caractérisé en ce que** la base de données (6) comprend au moins une troisième table (61, 62, 63) contenant plusieurs noms d'actions prévues chacune pour un flot sémantique différent auquel est associé un filtre spécifique.

## Patentansprüche

1. Verfahren zur Auslösung zumindest einer Handlung von Daten aus Digitalkommunikation, wenn diese zu demselben semantischen Strom gehören, für den die Handlung vorgesehen ist, mittels einer digitalen Verarbeitungsvorrichtung (1, 2), **dadurch gekennzeichnet, dass** es Schritte umfasst, in denen:
- die Vorrichtung (1, 2) mit zumindest einem Filter mit drei möglichen Zuständen versorgt wird, die aus einer oder mehreren Bedingungen über ein oder mehrere für den semantischen Strom spezifizierte Protokollattribute resultieren, einem sogenannten validen Zustand, der Protokollattributwerten entspricht, die bestätigen, dass die Bedingung bzw. Bedingungen verifiziert sind, einem sogenannten invaliden Zustand, der Protokollattributwerten entspricht, die bestätigen, dass die Bedingung bzw. Bedingungen nicht verifiziert sind, und einem sogenannten ungewissen Zustand, der einer Abwesenheit von Protokollattributwerten zur Bestätigung, dass die Bedingung bzw. Bedingungen verifiziert bzw. nicht verifiziert sind, entspricht, wobei jedes Protokollattribut spezifiziert wird durch eine geordnete Folge von Protokollnamen, die im semantischen Strom verwendet werden, und durch einen Parameternamen, der durch ein Protokoll übermittelt wird, dessen Name in der geordneten Folge von Protokollnamen angegeben ist;
- die digitale Verarbeitungsvorrichtung (1) den Filter mit drei Zuständen auf die Kommunikationsdaten anwendet (108), solange diese Daten keine anderen Protokollattributwerte als die, aus denen der ungewisse Filterzustand resultiert, bereitgestellt haben;
- die digitale Verarbeitungsvorrichtung (2) die Handlung auslöst, wenn der valide Filterzustand aus von den Kommunikationsdaten bereitgestellten Protokollattributwerten resultiert.

2. Verfahren nach Anspruch 1, **dadurch gekennzeichnet, dass** zur Anwendung des Filters auf die Kommunikationsdaten
- die digitale Verarbeitungsvorrichtung (1) nacheinander eines der Protokollattribute an eine Protokollschnittstelle (40, 41, 42, 43), die dem in der geordneten Folge von Protokollnamen (109) angegebenen Protokoll zugeordnet ist, sendet, bis der Filterzustand valid oder invalid ist oder bis alle Protokollattribute gesendet sind,
- die Protokollschnittstelle (40, 41, 42, 43) in den Kommunikationsdaten den Wert des spezifizierten Parameters sucht und diesen Wert, sofern sie ihn findet, an die digitale Verarbeitungsvorrichtung überträgt,
- die digitale Verarbeitungsvorrichtung (1) den Filterzustand, der dem von der Protokollschnittstelle (40, 41, 42, 43) übertragenen Wert bzw. der Abwesenheit dieses Werts entspricht, auswertet.

3. Verfahren nach Anspruch 1 oder 2, **dadurch gekennzeichnet, dass** jeder Filter zur Versorgung der digitalen Verarbeitungsvorrichtung durch eine logische Kombination von Regeln in einer ersten Tabelle (64) definiert ist, wobei jede Regel in einer zweiten Tabelle (65) durch einen Verifizierungsausdruck definiert ist, der zumindest einen Vergleichsoperator umfasst, wobei ein Argument des Vergleichsoperators das Protokollattribut ist.

4. Verfahren nach Anspruch 2 und 3, **dadurch gekennzeichnet, dass** zur Auswertung des Filterzustands, der dem von der Protokollschnittstelle übertragenen Wert bzw. der Abwesenheit dieses Werts entspricht, die digitale Verarbeitungsvorrichtung den Zustand zumindest einer Regel in der logischen Kombination in Abhängigkeit von der Wertübertragung und anschließend den Zustand, der durch die auf die ausgewerteten Zustände von Regeln angewandte logische Kombination gegeben ist, auswertet.

5. Verfahren nach einem der vorangehenden Ansprüche, **dadurch gekennzeichnet, dass** es einen Schritt (103) umfasst, in dem die Daten aus Digitalkommunikation abgetastet werden, um jede Wertänderung eines Protokollattributs zu erkennen und so die Auswertung einer Zustandsänderung des Filters, die einer Wertänderung entspricht, zu ermöglichen.

6. Datenverarbeitendes System zur Auslösung zumindest einer Handlung von Daten aus Digitalkommunikation, wenn diese zu demselben semantischen Strom gehören, für den die Handlung vorgesehen ist, **dadurch gekennzeichnet, dass** es Folgendes umfasst:
- eine digitale Verarbeitungsvorrichtung, die aus einem Filtermotor (1) und einem Handlungsmotor (2) ausgebildet ist;
- eine Datenbank (6) zur Versorgung des Filtermotors (1) mit zumindest einem Filter mit drei möglichen Zuständen, die aus einer oder mehreren Bedingungen über ein oder mehrere für den semantischen Strom spezifizierte Protokollattribute resultieren,
- zumindest eine Datenstruktur (50, 51, 52) zur Aufnahme eines sogenannten validen Zustands, der Protokollattributwerten entspricht, die bestätigen, dass die Bedingung bzw. Bedingungen verifiziert sind, eines sogenannten invaliden Zustands, der Protokollattributwerten entspricht, die bestätigen, das die Bedingung bzw. Bedingungen nicht verifiziert sind, und eines sogenannten ungewissen Zustands, der einer Abwesenheit von Protokollattributwerten zur Bestätigung, dass die Bedingung bzw. Bedingungen verifiziert bzw. nicht verifiziert sind, entspricht, wobei jedes Protokollattribut spezifiziert wird durch eine geordnete Folge von Protokollnamen, die im semantischen Strom verwendet werden, und durch einen Parameternamen, der durch ein Protokoll übermittelt wird, dessen Name in der geordneten Folge von Protokollnamen angegeben ist;
- Mittel (100) zum Empfang der Kommunikationsdaten, die vom Filtermotor (1) verwendbar sind, um jeden notwendigen Filter auf die Kommunikationsdaten anzuwenden, solange diese Daten keine anderen Protokollattributwerte als die, aus denen der ungewisse Filterzustand resultiert, bereitgestellt haben;
- Mittel (117) zur Übertragung der Kommunikationsdaten, die vom Handlungsmotor (2) verwendbar sind, um die Handlung auszulösen, wenn der valide Zustand in der Datenstruktur (50, 51, 52) enthalten ist.

7. Datenverarbeitendes System nach Anspruch 6, **dadurch gekennzeichnet, dass** es eine Protokollschnittstelle (40, 41, 42, 43) umfasst, die jedem verwendbaren Protokoll im semantischen Strom zugewiesen und eingerichtet ist, um vom Filtermotor (1) die Protokollattribute zu empfangen, die für das Protokoll, dem die Protokollschnittstelle zugewiesen ist, definiert sind;
- wobei die Protokollschnittstelle (40, 41, 42, 43) eingerichtet ist, um in den Kommunikationsdaten den spezifizierten Parameterwert zu suchen und diesen Wert, sofern sie ihn findet, an den Filtermotor (1) zu übertragen,
- wobei der Filtermotor (1) eingerichtet ist, um den Filterzustand, der dem von der Protokollschnittstelle (40, 41, 42, 43) übertragenen Wert bzw. der Abwesenheit dieses Werts entspricht, auszuwerten.

8. Datenverarbeitendes System nach Anspruch 6 oder 7, **dadurch gekennzeichnet, dass** die Datenbank (6) eine erste Tabelle (64) umfasst, die eine logische Kombination von Regeln für jeden Filter enthält, und eine zweite Tabelle (65) umfasst, die für jede Regel einen Verifizierungsausdruck enthält, der zumindest einen Vergleichsoperator umfasst, wobei ein Argument des Vergleichsoperators das Protokollattribut ist.

9. Datenverarbeitendes System nach Anspruch 7 und 8, **dadurch gekennzeichnet, dass** zur Auswertung des Filterzustands, der dem von der Protokollschnittstelle übertragenen Wert bzw. der Abwesenheit dieses Werts entspricht, die digitale Verarbeitungsvorrichtung eingerichtet ist, um den Zustand zumindest einer Regel in der logischen Kombination in Abhängigkeit von der Wertübertragung und anschließend den Zustand, der durch die auf die ausgewerteten Zustände von Regeln angewandte logische Kombination gegeben ist, auszuwerten.

10. Datenverarbeitendes System nach einem der Ansprüche 6 bis 9, **dadurch gekennzeichnet, dass** die Datenbank (6) zumindest eine dritte Tabelle (61, 62, 63) umfasst, die mehrere Namen von Handlungen enthält, die jeweils für einen anderen semantischen Strom, dem ein spezifischer Filter zuwiesen ist, vorgesehen sind.

## Claims

1. Method for triggering by means of a digital processing device (1, 2), at least one action on digital communication data when they belong to one and the same semantic flow for which said action is designed, **characterized in that** it comprises steps in which:
• said device (1, 2) is fed with at least one filter having three possible states which result from conditions on one or more protocol attributes specified for said semantic flow, a valid state corresponding to protocol attribute values which confirm that said conditions are satisfied, an invalid state corresponding to protocol attribute values which confirm that said conditions are not satisfied, an uncertain state corresponding to an absence of protocol attribute values to confirm that said conditions are or are not satisfied, each protocol attribute being specified by an ordered sequence of protocol names used in the semantic flow and by a parameter name conveyed by a protocol whose name is indicated in said ordered sequence of protocol names;
• the digital processing device (1) applies (108) the three-state filter to said communication data as long as these data have not afforded protocol attribute values other than those from which said uncertain state of the filter results;
• the digital processing device (2) triggers said action when said valid state of the filter results from protocol attribute values afforded by the communication data.

2. The method as claimed in claim 1, **characterized in that**, to apply the filter to said communication data,
• the digital processing device (1) successfully dispatches one of said protocol attributes to a protocol interface (40, 41, 42, 43) allocated to the protocol indicated in the ordered sequence of protocol names, (109) until the state of the filter is valid or invalid or until all the protocol attributes have been dispatched,
• the protocol interface (40, 41, 42, 43) searches through the communication data for the value of the specified parameter and transmits this value to the digital processing device if it finds the former,
• the digital processing device (1) evaluates the state of the filter which corresponds to the value or to the absence of value transmitted by the protocol interface (40, 41, 42, 43).

3. The method as claimed in claim 1 or 2, **characterized in that** each filter for feeding said digital processing device is defined by a logical combination of rules in a first table (M), each rule being defined in a second table (65) by a verification expression comprising at least one comparison operator, an argument of which is the protocol attribute.

4. The method as claimed in claim 2 and 3, **characterized in that** to evaluate the state of the filter which corresponds to the value or to the absence of value transmitted by the protocol interface, the digital processing device evaluates the state of at least one rule in the logical combination as a function of the transmission of value and then the state given by the logical combination applied to the evaluated states of rules.

5. The method as claimed in one of the preceding claims, **characterized in that** it comprises a step (103) in which the digital communication data are scanned so as to detect any change of value of a protocol attribute so as to make it possible to evaluate a change of state of the filter which corresponds to the change of value.

6. A computer system for triggering at least one action on digital communication data when they belong to one and the same semantic flow for which said action is designed, **characterized in that** it comprises,
• a digital processing device consisting of a filtering engine (1) and of an actions engine (2);
• a database (6) far feeding the filtering engine (1) with at least one filter having three possible states which result from conditions on one or more protocol attributes specified for said semantic flow;
• at least one data structure (50, 51, 52) for cataloguing a valid state corresponding to protocol attribute values which confirm that said conditions are satisfied, an invalid state corresponding to protocol attribute values which confirm that said conditions are not satisfied, an uncertain state corresponding to an absence of protocol attribute values to confirm that said conditions are or are not satisfied, each protocol attribute being specified by an ordered sequence of protocol names used in the semantic flow and by a parameter name conveyed by a protocol whose name is indicated in said ordered sequence of protocol names;
• means (100) for receiving communication data, useable by the filtering engine (1) to apply each necessary filter to said communication data as long as these data have not afforded any protocol attribute value other than those from which said uncertain state of the filter results;
• means of transmission (117) of the communication data, useable by the action engine (2) to trigger said action when said valid state is contained in the data structure (50, 51, 52).

7. The computer system as claimed in claim 6, **characterized in that** it comprises a protocol interface (40, 41, 42, 43) allocated to each useable protocol in the semantic flow, and configured to receive from the filtering engine (1), the protocol attributes defined for the protocol to which the protocol interface is allocated;
• the protocol Interface (40, 41, 42, 43) being devised so as to search through the communication data for the value of the specified parameter and to transmit this value to the filtering engine (1) if it finds the former,
• the filtering engine (1) being devised so as to evaluate the state of the filter which corresponds to the value or to the absence of value transmitted by the protocol interface (40, 41, 42, 43).

8. The computer system as claimed in claim 6 or 7, **characterized in that** the database (6) comprises a first table (64) which contains a logical combination of rules for each filter, and a second table (65) which contains for each rule, a verification expression comprising at least one comparison operator, an argument of which is the protocol attribute.

9. The computer system as claimed in claim 7 and 8,.**characterized in that** to evaluate the state of the filter which corresponds to the value or to the absence of value transmitted by the protocol Interface, the digital processing device is devised so as to evaluate the state of at least one rule in the logical combination as a function of the transmission of value and then the state given by the logical combination applied to the evaluated states of rules.

10. The computer system as claimed in any one of claims 6 to 9, **characterized in that** the database (6) comprises at least a third table (61, 62, 63) containing several names of actions each designed for a different semantic flow with which a specific filter is associated.
